(19) Europäisches Patentamt
European Patent Office
Office européen des brevets

(11) **EP 3 160 764 B1**

(12) **FASCICULE DE BREVET EUROPEEN**

(45) Date de publication et mention
de la délivrance du brevet:
**17.04.2019 Bulletin 2019/16**

(21) Numéro de dépôt: **15724328.8**

(22) Date de dépôt: **27.05.2015**

(51) Int Cl.:
***B60C 9/18*** *(2006.01)*

(86) Numéro de dépôt international:
**PCT/EP2015/061713**

(87) Numéro de publication internationale:
**WO 2015/197292 (30.12.2015 Gazette 2015/52)**

(54) **PNEUMATIQUE COMPORTANT UNE COUCHE D'ELEMENTS DE RENFORCEMENT CIRCONFERENTIELS**

REIFEN MIT EINER SCHICHT AUS UMLAUFENDEN VERSTÄRKUNGSELEMENTEN

TYRE COMPRISING A LAYER OF CIRCUMFERENTIAL REINFORCING ELEMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2014 FR 1455965**

(43) Date de publication de la demande:
**03.05.2017 Bulletin 2017/18**

(73) Titulaire: **Compagnie Générale des Etablissements Michelin**
**63000 Clermont-Ferrand (FR)**

(72) Inventeurs:
• **REHAB, Hichem**
**F-63040 CLERMONT-FERRAND Cedex 9 (FR)**
• **PARMENTIER, Jean-François**
**F-63040 CLERMONT-FERRAND Cedex 9 (FR)**

(74) Mandataire: **Le Cam, Stéphane Georges Elie et al Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
EP-A1- 0 785 096       WO-A1-2012/052522
WO-A1-2012/069603     FR-A1- 2 887 807

**Description**

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

On entend par « module d'élasticité » d'un mélange caoutchouteux, un module sécant d'extension à 10 % de déformation et à température ambiante.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités.

Afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Il est notamment connu d'introduire une couche de mélange caoutchouteux entre les extrémités des couches de travail pour créer un découplage entre lesdites extrémités pour limiter les contraintes de cisaillement. De telles couches de découplage doivent toutefois présenter une très bonne cohésion. De telles couches de mélanges caoutchouteux sont par exemple décrites dans la demande de brevet WO 2004/076204.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérèse, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

Les pneumatiques ainsi réalisés permettent effectivement d'améliorer les performances notamment en termes d'endurance.

Par ailleurs, il est connu pour réaliser des pneumatiques à bande de roulement très large ou bien pour conférer à des pneumatiques d'une dimension donnée des capacités de charges plus importantes d'introduire une couche d'éléments de renforcement circonférentiels. La demande de brevet WO 99/24269 décrit par exemple la présence d'une telle couche d'éléments de renforcement circonférentiels.

La couche d'éléments de renforcement circonférentiels est usuellement constituée par au moins un câble métallique enroulé pour former une spire dont l'angle de pose par rapport à la direction circonférentielle est inférieur à 2.5°.

Le document FR 2 887 807, qui divulgue un pneumatique à armature de carcasse radiale selon le préambule de la revendication 1, décrit encore un pneumatique dont l'armature sommet comporte deux couches de travail séparées l'une de l'autre par une couche d'éléments de renforcement circonférentiels, les extrémités des couches de travail étant séparées par une couche de mélange polymérique au contact d'une couche de sommet de travail et de l'armature de carcasse.

Lors d'essais, les inventeurs ont mis en évidence que lors de sollicitations de certaines conceptions de ce type de pneumatiques, comportant une couche d'éléments de renforcement circonférentiels, en dérive sévères et fréquentes telles que l'on peut les trouver lors de roulage sur des routes sinueuses, lesdits pneumatiques pouvaient présenter des propriétés en termes de rigidité de dérive telles, qu'il apparait un clivage au niveau des mélanges caoutchouteux constitutifs de l'armature sommet que l'on trouve entre les couches de travail. Un tel clivage est bien entendu pénalisant en termes de propriétés d'endurance du pneumatique. De tels clivages sont encore accentués lors de roulages en surcharge et à vitesse élevée, toujours sur des routes sinueuses.

Un but de l'invention est de fournir des pneumatiques dont les propriétés d'endurance sont conservées quel que soit l'usage et dont les performances en termes de résistance au roulement sont améliorées pour contribuer à une moindre consommation de carburant par les véhicules équipés de tels pneumatiques. L'invention vise notamment une amélioration des propriétés dynamiques des pneumatiques, et notamment de la rigidité de dérive, de sorte que les propriétés d'endurance sont conservées quel que soit l'usage et notamment dans des conditions de roulages en surcharge et à vitesse élevée

Ce but est atteint selon l'invention par un pneumatique à armature de carcasse radiale comprenant une armature de sommet formée d'au moins deux couches de sommet de travail d'éléments de renforcement, croisés d'une couche à l'autre en faisant avec la direction circonférentielle des angles compris entre 10° et 45°, lesdites au moins deux couches de sommet de travail étant chacune formée d'éléments de renforcement insérés entre deux couches de calandrage de mélange caoutchouteux, une première couche S de mélange polymérique étant au contact d'au moins une couche de sommet de travail et au contact de l'armature de carcasse, ladite première couche de mélange polymérique s'étendant axialement jusqu'au moins l'extrémité axiale de la bande de roulement, ladite bande de roulement coiffant l'armature de sommet et étant réunie à deux bourrelets par l'intermédiaire de deux flancs, l'armature de sommet comportant au moins une couche d'éléments de renforcement circonférentiels, le module d'élasticité sous tension à 10 % d'allongement d'au moins une couche de calandrage d'au moins une couche de sommet de travail est supérieur à 9 MPa et la valeur maximale de $\tan(\delta)$, noté $\tan(\delta)_{max}$, de ladite au moins une couche de calandrage d'au moins une couche de sommet de travail est inférieure à 0.100 et le module complexe de cisaillement dynamique G*, mesuré à 10% et 60 °C sur le cycle retour, de ladite première couche S de mélange polymérique étant supérieur à 1.35 MPa.

Le facteur de perte $\tan(\delta)$ est une propriété dynamique de la couche de mélange caoutchouteux. Il est mesuré sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm$^2$ de section), soumis à une sollicitation sinusoïdale en cisaillement simple alterné, à la fréquence de 10Hz, à une température de 60°C. On effectue un balayage en amplitude de déformation de 0,1 à 50% (cycle aller), puis de 50% à 1% (cycle retour). Les résultats exploités sont le module complexe de cisaillement dynamique (G*) et le facteur de perte $\tan(\delta)$. Pour le cycle retour, on indique la valeur maximale de $\tan(\delta)$ observée, noté $\tan(\delta)_{max}$.

La résistance au roulement est la résistance qui apparaît lorsque le pneumatique roule. Elle est représentée par les pertes hystérétiques liées à la déformation du pneumatique durant une révolution. Les valeurs de fréquence liées à la révolution du pneumatique correspondent à des valeurs de $\tan(\delta)$ mesurée entre 30 et 100°C. La valeur de $\tan(\delta)$ à 100 °C correspond ainsi à un indicateur de la résistance au roulement du pneumatique en roulage.

Il est encore possible d'estimer la résistance au roulement par la mesure des pertes d'énergie par rebond des échantillons à énergie imposée à des températures de 60 °C et exprimées en pourcentage.

Avantageusement selon l'invention, la perte à 60 °C, notée P60, de ladite au moins une couche de calandrage d'au moins une couche de sommet de travail est inférieure à 20 %.

L'utilisation de tels mélanges dont les modules d'élasticité sont supérieurs ou égaux à 9 MPa et dont la valeur $\tan(\delta)_{max}$ est inférieure à 0.100 va permettre d'améliorer les propriétés du pneumatique en matière de résistance au roulement en conservant des propriétés d'endurance satisfaisante.

Selon un mode de réalisation préféré de l'invention, ladite au moins une couche de calandrage d'au moins une couche de sommet de travail est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :

a) soit par du noir de carbone de surface spécifique BET inférieure à 60 m²/g, quelle que soit son indice de structure, employé à un taux compris entre 40 et 100 pce, et de préférence entre 60 et 90 pce,

b) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique BET comprise entre 30 et 260 m²/g employée à un taux compris entre 40 et 100 pce, et de préférence entre 60 et 90 pce,

c) soit par un coupage de noir de carbone décrit en (a) et d'une charge blanche décrite en (b), dans lequel le taux global de charge est compris entre 40 et 100 pce, et de préférence entre 60 et 90 pce.

La mesure de surface spécifique BET est effectuée selon la méthode de BRUNAUER, EMMET et TELLER décrite dans "The Journal of the American Chemical Society", vol. 60, page 309, février 1938, correspondant à la norme NFT 45007 de novembre 1987.

Dans le cas d'utilisation de charge claire ou charge blanche, il est nécessaire d'utiliser un agent de couplage et/ou de recouvrement choisi parmi les agents connus de l'homme de l'art. Comme exemples d'agents de couplage préférentiel, on peut citer les alcoxysilanes sulfurés du type polysulfure de bis-(3-trialcoxysilylpropyle), et parmi ceux-ci notamment le tétrasulfure de bis-(3-triéthoxysilylpropyle) commercialisé par la Société DEGUSSA sous les dénominations Si69 pour le produit liquide pur et X50S pour le produit solide (coupage 50/50 en poids avec du noir N330). Comme exemples d'agents de recouvrement on peut citer un alcool gras, un alkylalcoxysilane tel qu'un hexadécyltriméthoxy ou triéthoxysilane respectivement commercialisés par la Société DEGUSSA sous les dénominations Si116 et Si216, la diphénylguanidine, un polyéthylène glycol, une huile silicone éventuellement modifié au moyen des fonctions OH ou alcoxy. L'agent de recouvrement et/ou de couplage est utilisé dans un rapport pondéral par rapport à la charge $\geq$ à 1/100 et $\leq$ à 20/100, et préférentiellement compris entre 2/100 et 15/100 lorsque la charge claire représente la totalité de la charge renforçante et compris entre 1/100 et 20/100 lorsque la charge renforçante est constituée par un coupage de noir de carbone et de charge claire.

Comme autres exemples de charges renforçantes ayant la morphologie et les fonctions de surface SiOH et/ou AlOH des matières de type silice et/ou alumine précédemment décrites et pouvant être utilisées selon l'invention en remplacement partiel ou total de celles-ci, on peut citer les noirs de carbone modifiés soit au cours de la synthèse par addition à l'huile d'alimentation du four d'un composé du silicium et/ou d'aluminium soit après la synthèse en ajoutant, à une suspension aqueuse de noir de carbone dans une solution de silicate et/ou d'aluminate de sodium, un acide de façon à recouvrir au moins partiellement la surface du noir de carbone de fonctions SiOH et/ou AlOH. Comme exemples non limitatifs de ce type de charges carbonées avec en surface des fonctions SiOH et/ou AlOH, on peut citer les charges type CSDP décrites dans la Conférence N° 24 du Meeting ACS, Rubber Division, Anaheim, Californie, 6-9 mai 1997 ainsi que celles de la demande de brevet EP-A-0 799 854.

Lorsqu'une charge claire est utilisée comme seule charge renforçante, les propriétés d'hystérèse et de cohésion sont obtenues en utilisant une silice précipitée ou pyrogénée, ou bien une alumine précipitée ou bien encore un aluminosilicate de surface spécifique BET comprise entre 30 et 260 m²/g. Comme exemples non limitatifs de ce type de charge, on peut citer les silices KS404 de la Société Akzo, Ultrasil VN2 ou VN3 et BV3370GR de la Société Degussa, Zeopol 8745 de la Société Huber, Zeosil 175MP ou Zeosil 1165MP de la société Rhodia, HI-SIL 2000 de la Société PPG etc...

Parmi les élastomères diéniques pouvant être utilisés en coupage avec le caoutchouc naturel ou un polyisoprène synthétique à majorité d'enchaînements cis-1,4, on peut citer un polybutadiène (BR) de préférence à majorité d'enchaînements cis-1,4, un copolymère styrène-butadiène (SBR) solution ou émulsion, un copolymère butadiène-isoprène (BIR) ou bien encore un terpolymère styrène-butadiène-isoprène (SBIR). Ces élastomères peuvent être des élastomères modifiés en cours de polymérisation ou après polymérisation au moyen d'agents de ramification comme un divinylbenzène ou d'agents d'étoilage tels que des carbonates, des halogénoétains, des halogénosiliciums ou bien encore au moyen d'agents de fonctionnalisation conduisant à un greffage sur la chaîne ou en bout de chaîne de fonctions oxygénées carbonyle, carboxyle ou bien d'une fonction amine comme par exemple par action de la diméthyl ou de la diéthylamino benzophénone. Dans le cas de coupages de caoutchouc naturel ou de polyisoprène synthétique à majorité d'enchaînements cis-1,4 avec un ou plusieurs des élastomères diéniques, mentionnés ci-dessus, le caoutchouc naturel ou le polyisoprène synthétique est utilisé de préférence à un taux majoritaire et plus préférentiellement à un taux supérieur à 70 pce.

Le choix de la charge renforçante intervenant dans le mélange caoutchouteux constituant ladite au moins une couche de calandrage d'au moins une couche de sommet de travail contribue à la fois à l'obtention des valeurs de module d'élasticité sous tension à 10 % d'allongement et à l'obtention des valeurs de $\tan(\delta)_{max}$. Toutefois, dans les plages de valeurs précitées concernant les dites charges renforçantes, l'homme du métier saura encore adapter les quantités d'autres constituants usuels, tels que les agents vulcanisant ou bien les dérivés de cobalt, ou adapter les procédés de mélangeages pour obtenir les valeurs de module d'élasticité et de $\tan(\delta)_{max}$ précitées.

Les conceptions de pneumatiques plus usuelles prévoient des couches de calandrage des couches de sommet de travail avec des modules d'élasticité sous tension à 10 % d'allongement sensiblement équivalents à ceux de ladite au moins une couche de calandrage d'au moins une couche de sommet de travail selon l'invention mais des valeurs maximales de $\tan(\delta)$, noté $\tan(\delta)_{max}$, des couches de calandrage des couches de sommet de travail supérieures à 0.120. De tels mélanges plus usuels pour ce de type de couche conduisent à une meilleure cohésion.

Au sens de l'invention, un mélange caoutchouteux cohésif est un mélange caoutchouteux notamment robuste à la fissuration. La cohésion d'un mélange est ainsi évaluée par un test de fissuration en fatigue réalisé sur une éprouvette « PS » (pure shear). Il consiste à déterminer, après entaillage de l'éprouvette, la vitesse de propagation de fissure « Vp » (nm/cycle) en fonction du taux de restitution d'énergie « E » $(J/m^2)$. Le domaine expérimental couvert par la mesure est compris dans la plage -20°C et +150°C en température, avec une atmosphère d'air ou d'azote. La sollicitation de l'éprouvette est un déplacement dynamique imposé d'amplitude comprise entre 0.1mm et 10mm sous forme de sollicitation de type impulsionnel (signal « haversine » tangent) avec un temps de repos égal à la durée de l'impulsion ; la fréquence du signal est de l'ordre de 10Hz en moyenne.

La mesure comprend 3 parties :

• Une accommodation de l'éprouvette « PS », de 1000 cycles à 27% de déformation.

• une caractérisation énergétique pour déterminer la loi « E » = f (déformation). Le taux de restitution d'énergie « E » est égal à W0*h0, avec W0 = énergie fournie au matériau par cycle et par unité de volume et h0 = hauteur initiale de l'éprouvette. L'exploitation des acquisitions « force / déplacement » donne ainsi la relation entre « E » et l'amplitude de la sollicitation.

• La mesure de fissuration, après entaillage de l'éprouvette « PS ». Les informations recueillies conduisent à déterminer la vitesse de propagation de la fissure « Vp » en fonction du niveau de sollicitation imposé « E ».

Les inventeurs ont su mettre en évidence que la cohésion ladite au moins une couche de calandrage d'au moins une couche de sommet de travail conforme à l'invention reste satisfaisante.

Les inventeurs ont notamment mis en évidence que la présence d'au moins une couche d'éléments de renforcement circonférentiels contribue à une moindre évolution de la cohésion des couches de calandrage des couches de sommet de travail. En effet, les conceptions de pneumatiques plus usuelles comportant notamment des couches de calandrage des couches de sommet de travail avec des valeurs de $\tan(\delta)_{max}$ supérieures à 0.120, conduisent à une évolution de la cohésion desdites couches de calandrage des couches de sommet de travail, celle-ci tendant à s'affaiblir. Les inventeurs constatent que la présence d'au moins une couche d'éléments de renforcement circonférentiels qui limite les contraintes de cisaillement entre les extrémités des couches de sommet de travail et en outre, limite les augmentations de température conduit à une faible évolution de la cohésion desdites couches de calandrage des couches de sommet de travail. Les inventeurs considèrent ainsi que la cohésion de ladite au moins une couche de calandrage d'au moins une couche de sommet de travail, plus faible que ce qui existe dans les conceptions de pneumatiques plus usuelles, est satisfaisante dans la conception du pneumatique selon l'invention.

Les inventeurs ont ainsi su mettre en évidence que la présence d'au moins une couche d'éléments de renforcement circonférentiels permet de conserver des performances notamment en termes d'endurance mais également en termes d'usure satisfaisantes avec la combinaison d'un module d'élasticité sous tension à 10 % d'allongement de ladite au moins une couche de calandrage d'au moins une couche de sommet de travail supérieur à 9 MPa et d'une valeur de $\tan(\delta)_{max}$ de ladite au moins une couche de calandrage d'au moins une couche de sommet de travail inférieure à 0.100.

Les inventeurs ont encore su mettre en évidence que le choix d'une première couche S présentant un module complexe de cisaillement G*, mesuré à 10% et 60 °C sur le cycle retour, supérieur à 1.35 MPa améliore les propriétés dynamiques et notamment des propriétés de rigidité de dérive du pneumatique, notamment lorsque le pneumatique est soumis à des conditions de roulage particulièrement pénalisantes en termes de clivage des mélanges caoutchouteux. Les inventeurs ont en effet su mettre en évidence que malgré la présence d'une couche d'éléments de renforcement circonférentiels qui confère pourtant une rigidité significative au pneumatique, plus particulièrement à l'armature sommet de celui-ci, les caractéristiques énoncées ci-dessus de la première couche S apporte une contribution notable à cette propriété de rigidité de dérive.

En effet, de manière tout à fait inattendue pour l'homme du métier, les propriétés de la première couche S de mélange polymérique, ladite couche S étant positionnée au contact de l'armature de carcasse et d'au moins une couche de l'armature de sommet, ont une influence notable sur les propriétés de rigidité de dérive. La présence de la couche d'éléments de renforcement circonférentiels semblait pouvoir influencer les propriétés de rigidité de dérive de manière suffisante et a priori de manière optimale du fait de la rigidité qu'elle confère au pneumatique. Les essais réalisés ont mis en évidence que les propriétés de la première couche S ont un effet important sur les propriétés de rigidité de dérive du pneumatique et permettent de les améliorer y compris en présence d'une couche d'éléments de renforcement circonférentiels. Les inventeurs ont encore mis en évidence que le choix de cette première couche S de mélange polymérique ne dégrade pas les performances relatives aux sollicitations subies par le pneumatique lors de roulages en ligne droite.

Avantageusement selon l'invention, le module complexe de cisaillement G*, mesuré à 10% et 60 °C sur le cycle retour, de la première couche S est inférieur à 2 MPa, de sorte que les propriétés thermiques du pneumatique ne soit pas trop modifiées au risque de dégrader les propriétés d'endurance du pneumatique ainsi que ses propriétés de résistance au roulement.

Avantageusement encore, la valeur maximale de tan($\delta$), noté tan($\delta$)$_{max}$, de la première couche S est inférieure à 0.100.

Selon un mode de réalisation préféré de l'invention, la première couche S de mélange polymérique comporte une charge renforçante constituée :

a) soit par du noir de carbone de surface spécifique BET comprise entre 30 et 160 m$^2$/g, employé à un taux égal ou supérieur à 15 pce et inférieur ou égal à 28 pce,

b) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique comprise entre 30 et 260 m$^2$/g employée à un taux supérieur ou égal à 15 pce et inférieur ou égal à 55 pce,

c) soit par un coupage de noir de carbone décrit en a) et une charge blanche décrite en b), dans lequel le taux global de charge est supérieur ou égal à 15 pce et inférieur ou égal à 50 pce et le taux en pce de charge blanche est supérieur ou égal au taux de noir de carbone en pce moins 5.

Les inventeurs ont encore montré que la première couche S présente une cohésion suffisamment élevée pour limiter la propagation de fissures amorcées lorsqu'un objet perfore la bande de roulement du pneumatique. Les inventeurs mettent ainsi en évidence l'obtention d'un compromis de performances du pneumatique combinant les propriétés dynamiques, notamment la rigidité de dérive, la résistance au roulement et les propriétés d'endurance, y compris dans le cas énoncé ci-dessus lorsqu'un objet perfore la bande de roulement du pneumatique.

Selon une variante avantageuse de l'invention, le pneumatique comporte une deuxième couche G de mélange polymérique radialement entre l'armature de carcasse et la couche d'éléments de renforcement radialement la plus intérieure de l'armature de sommet de largeur axiale au moins égale à 70 % de la largeur de la couche d'éléments de renforcement radialement la plus intérieure de l'armature de sommet et présentant un module complexe de cisaillement G*, mesuré à 10% et 60 °C sur le cycle retour, supérieur à 1.35 MPa.

Selon un mode de réalisation préféré de cette variante de l'invention, la largeur axiale de ladite deuxième couche G est au plus égale à la largeur de la couche d'éléments de renforcement radialement la plus intérieure de l'armature de sommet et de préférence, au moins égale à 90 % de la largeur de la couche d'éléments de renforcement radialement la plus intérieure de l'armature de sommet.

De préférence également selon cette variante de l'invention, l'épaisseur, mesurée selon la direction radiale, de ladite deuxième couche G est supérieure à $\phi$ et de préférence inférieure à $3\phi$, $\phi$ étant le diamètre des éléments de renforcement de la couche d'armature de sommet radialement la plus intérieure.

Les inventeurs ont encore su mettre en évidence que la deuxième couche G de mélange polymérique ainsi définie contribue encore à l'amélioration des propriétés de rigidité de dérive du pneumatique en complément de la couche d'éléments de renforcement circonférentiels et de la première couche S de mélange polymérique.

Avantageusement selon l'invention, le module complexe de cisaillement G*, mesuré à 10% et 60 °C sur le cycle retour, de la deuxième couche G est inférieur à 2 MPa, de sorte que les propriétés thermiques du pneumatique ne soit pas trop modifiées au risque de dégrader les propriétés d'endurance du pneumatique ainsi que ses propriétés de résistance au roulement.

Avantageusement encore, la valeur maximale de tan(δ), noté tan(δ)$_{max}$, de la deuxième couche G est inférieure à 0.100.

Selon un mode de réalisation préféré de cette variante de l'invention, la deuxième couche G de mélange polymérique comporte une charge renforçante constituée :

a) soit par du noir de carbone de surface spécifique BET comprise entre 30 et 160 m2/g, employé à un taux égal ou supérieur à 15 pce et inférieur ou égal à 28 pce,

b) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique comprise entre 30 et 260 m$^2$/g employée à un taux supérieur ou égal à 15 pce et inférieur ou égal à 55 pce,

c) soit par un coupage de noir de carbone décrit en a) et une charge blanche décrite en b), dans lequel le taux global de charge est supérieur ou égal à 15 pce et inférieur ou égal à 50 pce et le taux en pce de charge blanche est supérieur ou égal au taux de noir de carbone en pce moins 5.

Avantageusement le mélange polymérique constituant la deuxième couche G est identique au mélange polymérique constituant la deuxième couche S.

Selon un mode de réalisation préféré de l'invention, le pneumatique comportant une couche C de mélange caoutchouteux disposée entre au moins les extrémités desdites au moins deux couches de sommet de travail et lesdites au moins deux couches de sommet de travail ayant des largeurs axiales inégales, la distance d entre l'extrémité de la couche de travail axialement la plus étroite et la couche de travail séparée de la couche de travail axialement la plus étroite par la couche C de mélange caoutchouteux est telle que 1.1ø < d < 2.2ø, ø étant le diamètre des éléments de renforcement de ladite au moins une couche d'éléments de renforcement circonférentiels et, dans un plan méridien, l'épaisseur de la couche C de mélange caoutchouteux étant sensiblement constante sur la largeur axiale comprise entre l'extrémité axialement intérieure de la couche C et l'extrémité de la couche de travail axialement la plus étroite.

Au sens de l'invention, la distance d est mesurée dans un plan méridien de câble à câble, c'est-à-dire entre le câble d'une première couche de travail et le câble d'une seconde couche de travail, selon une direction sensiblement perpendiculaire aux surfaces de la couche C. En d'autres termes, cette distance d englobe l'épaisseur de la première couche C et les épaisseurs respectives des mélanges caoutchouteux de calandrage, radialement extérieure aux câbles de la couche de travail radialement intérieure et radialement intérieure aux câbles de la couche de travail radialement extérieure.

Au sens de l'invention, l'épaisseur de la couche C de mélange caoutchouteux est mesurée entre les deux surfaces de ladite couche C selon la projection orthogonale d'un point d'une surface sur l'autre surface.

Au sens de l'invention, l'épaisseur de la couche C de mélange caoutchouteux est sensiblement constante signifie qu'elle ne varie pas de plus de 0.3 mm. Ces variations d'épaisseur ne sont dues qu'aux phénomènes de fluage lors de la fabrication et de la cuisson du pneumatique. La couche C sous forme de semi-fini, c'est-à-dire en tant qu'éléments prêt à être utilisé pour la réalisation d'un pneumatique présente ainsi avantageusement une épaisseur constante.

Les différentes mesures d'épaisseur sont effectuées sur une coupe transversale d'un pneumatique, le pneumatique étant donc dans un état non gonflé.

La couche C de mélange caoutchouteux permet d'obtenir un découplage desdites couches de sommet de travail afin de répartir les contraintes de cisaillement sur une plus grande épaisseur.

Au sens de l'invention des couches couplées sont des couches dont les éléments de renforcement respectifs sont séparés radialement d'au plus 1,5 mm, ladite épaisseur de caoutchouc étant mesurée radialement entre les génératrices respectivement supérieure et inférieure desdits éléments de renforcement.

Les conceptions de pneumatiques plus usuelles, prévoient des couches de mélange caoutchouteux disposées entre les extrémités des couches de sommet de travail avec des épaisseurs plus importantes notamment au niveau de l'extrémité de la couche de travail la plus étroite et avec un profil d'épaisseur non homogène lorsque celui-ci est vu selon une coupe méridienne du pneumatique pour autoriser une telle épaisseur et pour éviter de trop perturber l'environnement de l'extrémité de la couche de travail la plus étroite. Comme expliqué précédemment, la présence de cette couche de mélange caoutchouteux permet notamment de limiter les contraintes de cisaillement entre les extrémités des couches de sommet de travail, les rigidités circonférentielles desdites couches de sommet de travail étant nulles à leur extrémité. La distance entre l'extrémité de la couche de travail axialement la plus étroite et la couche de travail séparée de la couche de travail axialement la plus étroite par la couche de mélange caoutchouteux, mesurée conformément à la définition de d ci-dessus, est habituellement supérieure à 3.3 mm. Cela correspond à une épaisseur de la couche de mélange caoutchouteux d'au moins 2.5 mm alors que, généralement, son épaisseur tend à chacune de ses extrémités vers une valeur inférieure à 0.5 mm.

Les inventeurs ont su mettre en évidence que la présence d'au moins une couche d'éléments de renforcement circonférentiels permet de conserver des performances notamment en termes d'endurance satisfaisantes avec une couche C de mélange caoutchouteux d'épaisseur sensiblement constante sur la largeur axiale comprise entre l'extrémité axialement intérieure de la couche C et l'extrémité de la couche de travail axialement la plus étroite et telle que la distance d soit comprise entre 1.1ø et 2.2ø. Il semble en effet, que la présence de la couche d'éléments de renforcement circonférentiels contribue suffisamment à la reprise d'au moins une partie de la tension circonférentielle notamment lors du passage dans l'aire de contact pour diminuer les contraintes de cisaillement entre les extrémités des couches de sommet de travail.

En outre, la combinaison de la couche d'éléments de renforcement circonférentiels et de la première couche S, voire de la deuxième couche G, présentant un module complexe de cisaillement G*, mesuré à 10% et 60 °C sur le cycle retour, supérieur à 1.35 MPa permet encore de conserver des propriétés de rigidité de dérive du pneumatique satisfaisantes lorsque la couche C présente une épaisseur sensiblement constante sur la largeur axiale comprise entre l'extrémité axialement intérieure de la couche C et l'extrémité de la couche de travail axialement la plus étroite et telle que la distance d soit comprise entre 1.1ø et 2.2ø, une telle caractéristique relative à l'épaisseur de la couche C étant pénalisante quant aux propriétés de rigidité de dérive du pneumatique.

Par ailleurs, la couche C de mélange caoutchouteux se présente ainsi avantageusement à l'état de semi-fini sous forme d'une couche d'épaisseur constante qui est simple de fabrication et en outre qui peut être stockée simplement. En effet, les couches habituellement utilisées telles que décrites précédemment qui présentent en coupe une forme avec des variations d'épaisseur sont d'une part plus difficiles réaliser et d'autre part plus difficile à stocker. En effet, les variations d'épaisseur créent des problèmes de stockage, ces semi-finis étant le plus souvent stockés sous forme d'enroulement sur bobine. La couche C selon l'invention se présente à l'état de produit semi-fini avec une section présentant un profil sensiblement plat comparée aux couches habituellement utilisées qui se présentent à l'état de produit semi-fini avec une section présentant un profil sensiblement arrondi.

La fabrication et le stockage de la couche de mélange caoutchouteux conforme à l'invention sous forme de semi-fini étant ainsi tellement simplifiés, il peut en résulter des coûts moindres pour la fabrication du pneumatique, celui-ci pouvant pourtant comporter une couche d'éléments de renforcement circonférentiels en plus en comparaison d'un pneumatique usuel.

Selon un mode de réalisation avantageux de l'invention, la couche de sommet de travail axialement la plus large est radialement à l'intérieur des autres couches de sommet de travail.

De préférence encore, la largeur axiale D de la couche de mélange caoutchouteux C comprise entre l'extrémité axialement la plus à l'intérieure de ladite couche de mélange caoutchouteux C et l'extrémité de la couche de sommet de travail axialement la moins large est telle que :

$$3.\phi_2 \le D \le 25.\phi_2$$

avec $\phi 2$, diamètre des éléments de renforcement de la couche de sommet de travail axialement la moins large. Une telle relation définit une zone d'engagement entre la couche de mélange caoutchouteux C et la couche de sommet de travail axialement la moins large. Un tel engagement en dessous d'une valeur égale à trois fois le diamètre des éléments de renforcement de la couche de travail axialement la moins large peut ne pas être suffisant pour obtenir un découplage des couche de sommet de travail pour notamment obtenir une atténuation des sollicitations en extrémité de la couche de sommet de travail axialement la moins large. Une valeur de cet engagement supérieure à vingt fois le diamètre des éléments de renforcement de la couche de travail axialement la moins large peut conduire à une diminution trop importante de la rigidité de dérive de l'armature de sommet du pneumatique.

De préférence, la largeur axiale D de la couche de mélange caoutchouteux C comprise entre l'extrémité axialement la plus à l'intérieure de ladite couche de mélange caoutchouteux C et l'extrémité de la couche de sommet de travail axialement la moins large est supérieure à 5 mm.

Selon une réalisation avantageuse de l'invention, lesdits éléments de renforcement d'au moins une couche de sommet de travail sont des câbles à couches saturées, au moins une couche interne étant gainée d'une couche constituée d'une composition polymérique telle qu'une composition de caoutchouc non réticulable, réticulable ou réticulée, de préférence à base d'au moins un élastomère diénique.

Des câbles dits "à couches" (*"layered cords"*) ou "multicouches" sont des câbles constitués d'un noyau central et d'une ou plusieurs couches de brins ou fils pratiquement concentriques disposées autour de ce noyau central.

Au sens de l'invention, une couche saturée d'un câble à couches est une couche constituée de fils dans laquelle il n'existe pas suffisamment de place pour y ajouter au moins un fil supplémentaire.

Les inventeurs ont su mettre en évidence que la présence des câbles tels qu'ils viennent d'être décrits comme éléments de renforcement des couches de sommet de travail permettent de contribuer à de meilleures performances en termes d'endurance.

En effet, il apparaît comme expliqué ci-dessus que les mélanges caoutchouteux des calandrages des couches de travail permettent de diminuer la résistance au roulement du pneumatique. Cela se traduit par une baisse des températures de ces mélanges caoutchouteux, lors de l'utilisation du pneumatique, qui peut entraîner une moindre protection des éléments de renforcement vis-à-vis des phénomènes d'oxydation dans certains cas d'utilisation du pneumatique. En effet, les propriétés des mélanges caoutchouteux relatives au blocage de l'oxygène diminuent avec la température et la présence d'oxygène peut conduire à une dégénérescence progressive des propriétés mécaniques des câbles, pour les conditions de roulage les plus sévères, et peut altérer la durée de vie de ces câbles.

La présence de la gaine de caoutchouc au sein des câbles décrits ci-dessus vient compenser cet éventuel risque d'oxydation des éléments de renforcement, la gaine contribuant au blocage de l'oxygène.

Par l'expression "composition à base d'au moins un élastomère diénique", on entend de manière connue que la composition comprend à titre majoritaire (i.e. selon une fraction massique supérieure à 50%) ce ou ces élastomères diéniques.

On notera que la gaine selon l'invention s'étend d'une manière continue autour de la couche qu'elle recouvre (c'est-à-dire que cette gaine est continue dans la direction "orthoradiale" du câble qui est perpendiculaire à son rayon), de manière à former un manchon continu de section transversale qui est avantageusement pratiquement circulaire.

On notera également que la composition de caoutchouc de cette gaine peut être réticulable ou réticulée, c'est-à-dire qu'elle comprend par définition un système de réticulation adapté pour permettre la réticulation de la composition lors de sa cuisson (i.e., son durcissement et non sa fusion) ; ainsi, cette composition de caoutchouc peut être qualifiée d'infusible, du fait qu'elle ne peut pas être fondue par chauffage à quelque température que ce soit.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De préférence, le système de réticulation de la gaine de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus.

La composition de caoutchouc de la gaine selon l'invention peut comprendre, outre ledit système de réticulation, tous les ingrédients habituels utilisables dans les compositions de caoutchouc pour pneumatiques, tels que des charges renforçantes à base de noir de carbone et/ou d'une charge inorganique renforçante telle que silice, des agents anti-vieillissement, par exemple des antioxydants, des huiles d'extension, des plastifiants ou des agents facilitant la mise en oeuvre des compositions à l'état cru, des accepteurs et donneurs de méthylène, des résines, des bismaléimides, des systèmes promoteurs d'adhésion connus du type "RFS" (résorcinol-formaldéhyde-silice) ou sels métalliques, notamment des sels de cobalt.

A titre préférentiel, la composition de cette gaine est choisie identique à la composition utilisée pour la couche de calandrage de la couche de sommet de travail que les câbles sont destinés à renforcer. Ainsi, il n'y a aucun problème d'incompatibilité éventuelle entre les matériaux respectifs de la gaine et de la matrice de caoutchouc.

Selon une variante de l'invention, lesdits câbles d'au moins une couche de sommet de travail sont des câbles à couches de construction [L+M], comportant une première couche C1 à L fils de diamètre $d_1$ enroulés ensemble en hélice selon un pas $p_1$ avec L allant de 1 à 4, entourée d'au moins une couche intermédiaire C2 à M fils de diamètre $d_2$ enroulés ensemble en hélice selon un pas $p_2$ avec M allant de 3 à 12, une gaine constituée d'une composition de caoutchouc non réticulable, réticulable ou réticulée à base d'au moins un élastomère diénique, recouvrant, dans la construction ladite première couche C1.

De préférence, le diamètre des fils de la première couche de la couche interne (C1) est compris entre 0.10 et 0.5 mm et le diamètre des fils de la couche externe (C2) est compris entre 0.10 et 0.5 mm.

De préférence encore, le pas d'hélice d'enroulement desdits fils de la couche externe (C2) est compris entre 8 et 25 mm.

Au sens de l'invention, le pas d'hélice représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'un fil d'une couche constitutive du câble, l'axe de ce fil a dans ces deux plans la même position sur les deux cercles correspondant à la couche du fil considéré.

Avantageusement, le câble présente l'une, et plus préférentiellement encore l'ensemble des caractéristiques suivantes qui est vérifié(e) :

- la couche C2 est une couche saturée, c'est-à-dire qu'il n'existe pas suffisamment de place dans cette couche pour y ajouter au moins un (N+1)ème fil de diamètre $d_2$, N représentant alors le nombre maximal de fils enroulables en une couche autour de la couche C1 ;
- la gaine de caoutchouc recouvre en outre la couche interne C1 et/ou sépare les fils deux à deux adjacents de la couche externe C2 ;

- la gaine de caoutchouc recouvre pratiquement la demi-circonférence radialement intérieure de chaque fil de la couche C2, de telle sorte qu'elle sépare les fils deux à deux adjacents de cette couche C2.

De préférence, la gaine de caoutchouc présente une épaisseur moyenne allant de 0,010 mm à 0,040 mm.

D'une manière générale, lesdits câbles selon l'invention peuvent être réalisés avec tout type de fils métalliques, notamment en acier, par exemple des fils en acier au carbone et/ou des fils en acier inoxydable. On utilise de préférence un acier au carbone, mais il est bien entendu possible d'utiliser d'autres aciers ou d'autres alliages.

Lorsqu'un acier au carbone est utilisé, sa teneur en carbone (% en poids d'acier) est de préférence comprise entre 0,1% et 1,2%, plus préférentiellement de 0,4% à 1,0% ; ces teneurs représentent un bon compromis entre les propriétés mécaniques requises pour le pneumatique et la faisabilité du fil. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Lesdits câbles selon l'invention pourront être obtenus selon différentes techniques connues de l'homme du métier, par exemple en deux étapes, tout d'abord par gainage via une tête d'extrusion de l'âme ou couches C1, étape suivie dans un deuxième temps d'une opération finale de câblage ou retordage des M fils restants (couche C2) autour de la couche C1 ainsi gainée. Le problème de collant à l'état cru posé par la gaine de caoutchouc, lors des opérations intermédiaires éventuelles de bobinage et débobinage pourra être résolu de manière connue par l'homme du métier, par exemple par l'emploi d'un film intercalaire en matière plastique.

De tels câbles d'au moins une couche de sommet de travail sont par exemple choisis parmi les câbles décrits dans les demandes de brevet WO 2006/013077 et WO 2009/083212.

Selon une variante avantageuse de réalisation de l'invention, la couche d'éléments de renforcement circonférentiels présente une largeur axiale supérieure à 0.5xS.

S est la largeur maximale axiale du pneumatique, lorsque ce dernier est monté sur sa jante de service et gonflé à sa pression recommandée.

Les largeurs axiales des couches d'éléments de renforcement sont mesurées sur une coupe transversale d'un pneumatique, le pneumatique étant donc dans un état non gonflé.

Selon une réalisation préférée de l'invention, au moins deux couches de sommet de travail présentant des largeurs axiales différentes, la différence entre la largeur axiale de la couche de sommet de travail axialement la plus large et la largeur axiale de la couche de sommet de travail axialement la moins large étant comprise entre 10 et 30 mm.

Selon un mode de réalisation préférée de l'invention, la couche d'éléments de renforcement circonférentiels est radialement disposée entre deux couches de sommet de travail.

Selon ce mode de réalisation de l'invention, la couche d'éléments de renforcement circonférentiels permet de limiter de manière plus importante les mises en compression des éléments de renforcement de l'armature de carcasse qu'une couche semblable mise en place radialement à l'extérieur des couches de travail. Elle est préférablement radialement séparée de l'armature de carcasse par au moins une couche de travail de façon à limiter les sollicitations desdits éléments de renforcement et ne pas trop les fatiguer.

Avantageusement encore selon l'invention, les largeurs axiales des couches de sommet de travail radialement adjacentes à la couche d'éléments de renforcement circonférentiels sont supérieures à la largeur axiale de ladite couche d'éléments de renforcement circonférentiels et de préférence, lesdites couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par ladite couche de mélange de caoutchouc C au moins sur le restant de la largeur commune aux dites deux couches de travail.

La présence de tels couplages entre les couches de sommet de travail adjacentes à la couche d'éléments de renforcement circonférentiels permettent la diminution des contraintes de tension agissant sur les éléments circonférentiels axialement le plus à l'extérieur et situé le plus près du couplage.

Selon un mode de réalisation avantageux de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement des parties axialement extérieures et de la partie centrale d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels peuvent être formées d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport a/λ de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible.

Les éléments métalliques sont préférentiellement des câbles d'acier.

Selon un mode de réalisation préféré de l'invention, les éléments de renforcement des couches de sommet de travail sont des câbles métalliques inextensibles.

L'invention prévoit encore avantageusement pour diminuer les contraintes de tension agissant sur les éléments circonférentiels axialement le plus à l'extérieur que l'angle formé avec la direction circonférentielle par les éléments de renforcement des couches de sommet de travail est inférieur à 30° et de préférence inférieur à 25°.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

Le pneumatique selon l'invention tel qu'il vient d'être décrit présente donc une résistance au roulement améliorée par rapport aux pneumatiques usuels et des propriétés de rigidité de dérive améliorées et donc des performances en termes d'endurance renforcées quelles que soient les conditions de roulage.

D'autres détails et caractéristiques avantageux de l'invention ressortiront ci-après de la description des exemples de réalisation de l'invention en référence aux figures 1 à 3 qui représentent :

- figure1, une vue méridienne d'un schéma d'un pneumatique selon un mode de réalisation de l'invention,

- figure 2, une vue méridienne d'un schéma d'un pneumatique selon un deuxième mode de réalisation de l'invention,

- figure 3, une vue méridienne d'un schéma d'un pneumatique selon un troisième mode de réalisation de l'invention.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

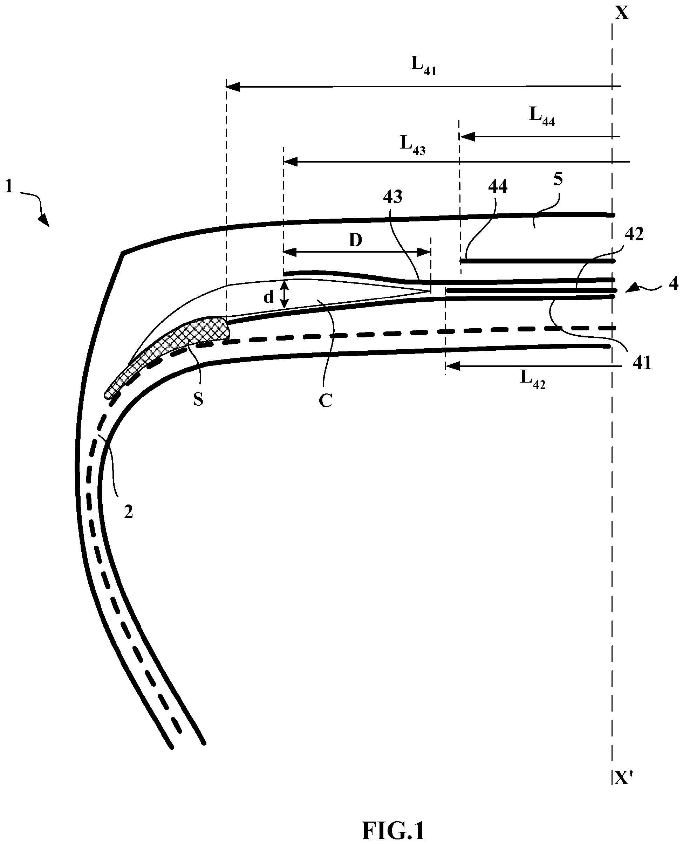

Sur la figure 1, le pneumatique 1, de dimension 315/70 R 22.5, a un rapport de forme H/S égal à 0,70, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur la figure. L'armature de carcasse est formée d'une seule couche de câbles métalliques. Cette armature de carcasse 2 est frettée par une armature de sommet 4, formée radialement de l'intérieur à l'extérieur :

- d'une première couche de travail 41 formée de câbles métalliques inextensibles 9.28 non frettés, continus sur toute la largeur de la nappe, orientés d'un angle égal à 24°,

- d'une couche d'éléments de renforcement circonférentiels 42 formée de câbles métalliques en acier 21x23, de type "bi-module",

- d'une seconde couche de travail 43 formée de câbles métalliques inextensibles 9.28 non frettés, continus sur toute la largeur de la nappe, orientés d'un angle égal à 24° et croisés avec les câbles métalliques de la couche 41,

- d'une couche de protection 44 formées de câbles métalliques élastiques 6.35.

L'armature de sommet est elle-même coiffée d'une bande de roulement 5.

La largeur axiale maximale S du pneumatique est égale à 317 mm.

La largeur axiale $L_{41}$ de la première couche de travail 41 est égale à 252 mm.

La largeur axiale $L_{43}$ de la deuxième couche de travail 43 est égale à 232 mm. La différence entre les largeurs $L_{41}$ et $L_{43}$ est égale à 15 mm.

Quant à la largeur axiale $L_{42}$ de la couche d'éléments de renforcement circonférentiels 42, elle est égale à 194 mm.

La dernière nappe de sommet 44, dite de protection, a une largeur $L_{44}$ égale à 124 mm.

Une couche de mélange caoutchouteux C est encore présente pour découpler les extrémités des couches de sommet de travail 41 et 43.

La zone d'engagement de la couche C entre les deux couches de sommet de travail 41 et 43 est définie par son épaisseur ou plus précisément la distance radiale d entre l'extrémité de la couche 43 et la couche 41 et par la largeur axiale D de la couche C comprise entre l'extrémité axialement intérieure de ladite couche C et l'extrémité de la couche de sommet de travail 43 radialement extérieure. La distance radiale d est égale à 3.5 mm. La distance axiale D est égale à 20 mm.

Selon l'invention, une première couche S de mélange caoutchouteux est mise en place entre l'armature de carcasse 2 et la première couche de travail 41.

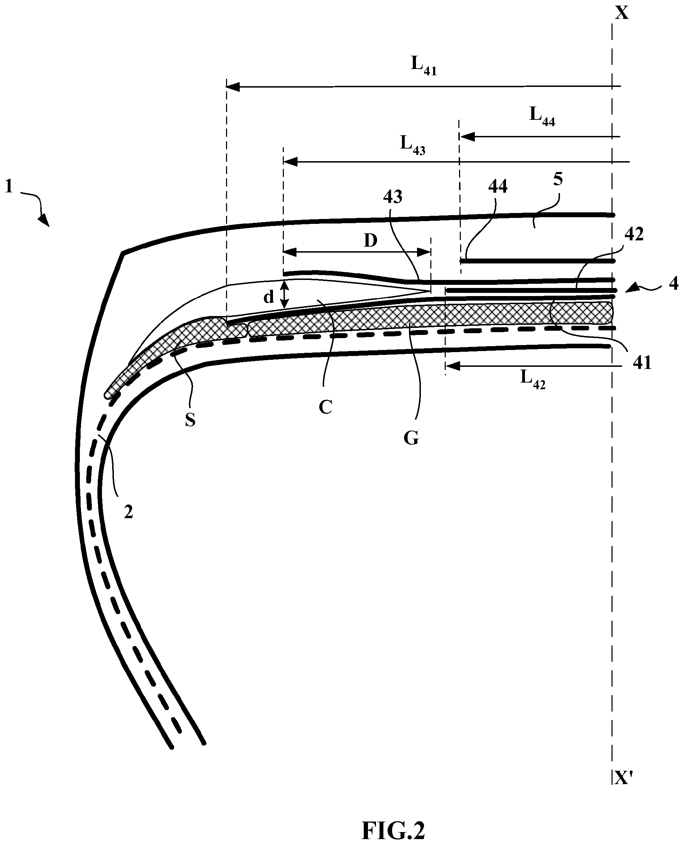

Sur la figure 2, le pneumatique 1 diffère de celui représenté sur la figure 1 en ce qu'une deuxième couche G prolonge axialement la première couche S, radialement entre l'armature de carcasse 2 et la première couche de travail 41.

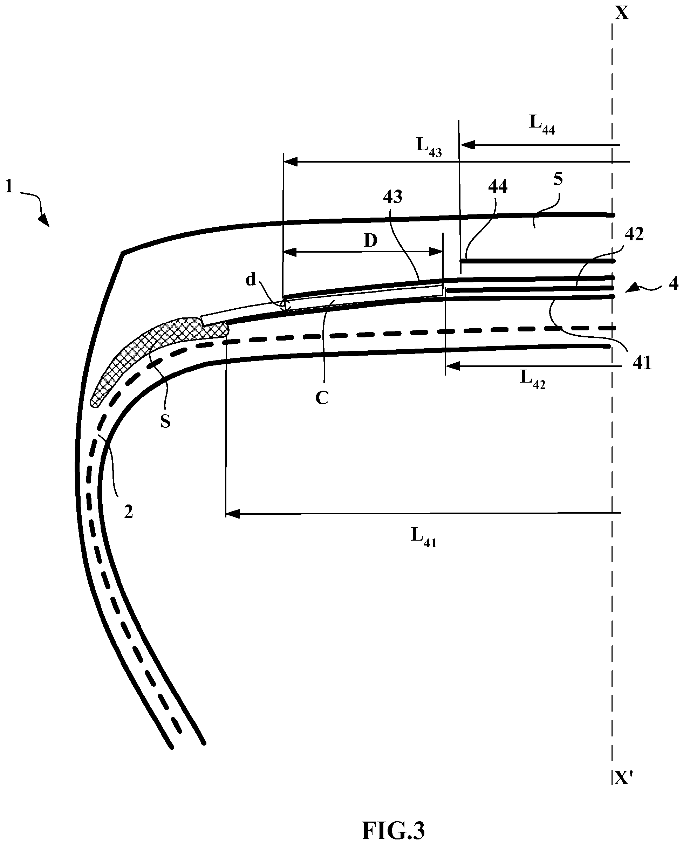

Sur la figure 3, le pneumatique 1 diffère de celui de la figure 1 par la forme de la couche C qui est sensiblement plate. La distance radiale d est égale à 2 mm, ce qui correspond à une épaisseur de la couche C égale à 1.2 mm. Conformément à la variante de l'invention représentée sur cette figure 2, l'épaisseur de la couche C est sensiblement identique dans une vue méridienne sur la largeur axiale comprise entre l'extrémité axialement intérieure de la couche C et l'extrémité de la couche de travail axialement la plus étroite.

Le diamètre des éléments de renforcement circonférentiels de la couche 42 est égale à 1.35 mm. La distance d est donc égale à 1.48 fois le diamètre ø de ces éléments.

Des essais ont été réalisés avec différents pneumatiques réalisés selon l'invention conformément aux représentations des figures 1 et 3 ainsi qu'avec des pneumatiques de référence.

Des essais sont notamment réalisés en faisant varier les caractéristiques des mélanges des calandrages des couches de travail 41 et 43, notamment leur module d'élasticité sous tension à 10 % d'allongement et la valeur $\tan(\delta)_{max}$ et les caractéristiques des mélanges de la couche S, notamment le module complexe de cisaillement dynamique G*, mesuré à 10% et 60 °C sur le cycle retour.

D'autres essais sont encore réalisés en faisant varier la forme et les dimensions de la couche C.

Les différents mélanges utilisés sont listés ci-après.

|  | Mélange R1 | Mélange R2 | Mélange 1 | Mélange 2 |
|---|---|---|---|---|
| NR | 100 | 100 | 100 | 100 |
| Noir N347 | 52 |  |  |  |
| Noir N683 |  |  | 63 |  |
| Noir N326 |  |  |  | 5 |
| Noir N330 |  | 35 |  |  |
| Silice 165G |  |  |  | 40 |
| Antioxydant (6PPD) | 1 | 07 | 1 | 1.5 |
| Acide stéarique | 0.65 | 1.4 | 0.65 | 1 |
| Oxyde de zinc | 9.3 | 2.1 | 9.3 | 5 |
| Sel de Cobalt (AcacCo) | 1.12 |  | 1.12 |  |
| Silane sur noir |  |  |  | 5 |

(suite)

| | Mélange R1 | Mélange R2 | Mélange 1 | Mélange 2 |
|---|---|---|---|---|
| soufre | 6.1 | 2.15 | 6.1 | 1.75 |
| PEG | | | | 2.5 |
| Accélérateur DCBS | 0.93 | | 0.93 | |
| Accélérateur CBS | | 1 | | 0.9 |
| Co-accélérateur DPG | | | | 0.34 |
| Retardateur CTP (PVI) | 0.25 | 0.08 | 0.25 | |
| $MA_{10}$ (MPa) | 10.4 | 3.4 | 10.03 | 4.3 |
| $\tan(\delta)_{max}$ | 0.130 | 0.074 | 0.092 | 0.087 |
| P60 (%) | 22.9 | 11.3 | 17.4 | 16.5 |
| G* 10% à 60°C (cycle retour) | | 1.25 | | 1.55 |

Les valeurs des constituants sont exprimées en pce (parties en poids pour cent parties d'élastomères).

Différents pneumatiques de référence ont été testés.

Des premiers pneumatiques de référence T1 possèdent des couches de travail dont les calandrages sont constitués du mélange R1, une couche C telle que représentée sur la figure 1 et présentant une distance d égale à 3.5 mm et un profil de sa section arrondi, et une première couche S constituée du mélange R2.

Des deuxièmes pneumatiques de référence T2 possèdent des couches de travail dont les calandrages sont constitués du mélange 1, une couche C telle que représentée sur la figure 1 et présentant une distance d égale à 3.5 mm et un profil de sa section arrondi et une première couche S constituée du mélange R2.

Des troisièmes pneumatiques de référence T3 possèdent des couches de travail dont les calandrages sont constitués du mélange 1, une couche C telle que représentée sur la figure 3 et une première couche S constituée du mélange R2.

Différents pneumatiques selon l'invention ont été testés.

Des premiers pneumatiques S1 conforment à l'invention possèdent des couches de travail dont les calandrages sont constitués du mélange 1, une couche C telle que représentée sur la figure 1 et présentant une distance d égale à 3.5 mm et un profil de sa section arrondi et une première couche S constituée du mélange 2.

Des deuxièmes pneumatiques S2 conforment à l'invention possèdent des couches de travail dont les calandrages sont constitués du mélange 1, une couche C telle que représentée sur la figure 3 et une première couche S constituée du mélange 2.

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 4000 Kg progressivement augmentée pour réduire la durée du test.

Il s'avère que l'ensemble des pneumatiques testés présente des résultats sensiblement comparables.

D'autres essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les distances parcourues varient d'un type de pneumatique à l'autre, des déchéances apparaissant du fait d'une dégradation des mélanges caoutchouteux au niveau des extrémités des couches de travail. Les résultats sont exprimés dans le tableau qui suit en référence à une base 100 fixé pour le pneumatique de référence T1.

| Pneumatique T1 | Pneumatique T2 | Pneumatique T3 | Pneumatique S1 | Pneumatique S2 |
|---|---|---|---|---|
| 100 | 110 | 90 | 130 | 110 |

Par ailleurs, des mesures de résistance au roulement ont été effectuées. Ces mesures ont portés sur l'ensemble des pneumatiques décrits précédemment.

Les résultats des mesures sont présentés dans le tableau suivant ; elles sont exprimées en Kg/t, une valeur de 100 étant attribuée au pneumatique T1.

| Pneumatique T1 | Pneumatique T2 | Pneumatique T3 | Pneumatique S1 | Pneumatique S2 |
|----------------|----------------|----------------|----------------|----------------|
| 100 | 98 | 97 | 98 | 97 |

**Revendications**

1. Pneumatique (1) à armature de carcasse radiale (2) comprenant une armature de sommet (4) formée d'au moins deux couches de sommet de travail (41, 43) d'éléments de renforcement, croisés d'une couche à l'autre en faisant avec la direction circonférentielle des angles compris entre 10° et 45°, lesdites au moins deux couches de sommet de travail (41, 43) étant chacune formée d'éléments de renforcement insérés entre deux couches de calandrage de mélange caoutchouteux, une première couche (S) de mélange polymérique étant au contact d'au moins une couche de sommet de travail (41) et au contact de l'armature de carcasse (2), ladite première couche (S) de mélange polymérique s'étendant axialement jusqu'au moins l'extrémité axiale de la bande de roulement (5), ladite bande de roulement (5) coiffant l'armature sommet (4) et étant réunie à deux bourrelets par l'intermédiaire de deux flancs, l'armature de sommet (4) comportant au moins une couche d'éléments de renforcement circonférentiels (42), **caractérisé en ce que** le module d'élasticité sous tension à 10 % d'allongement d'au moins une couche de calandrage d'au moins une couche de sommet de travail (41, 43) est supérieur à 9 MPa, **en ce que** la valeur maximale de $\tan(\delta)$, noté $\tan(\delta)_{max}$, de ladite au moins une couche de calandrage d'au moins une couche de sommet de travail (41, 43) est inférieure à 0.100 et **en ce que** le module complexe de cisaillement dynamique G*, mesuré à 10% et 60 °C sur le cycle retour, de ladite première couche (S) de mélange polymérique est supérieur à 1.35 MPa.

2. Pneumatique (1) selon la revendication 1, **caractérisé en ce que** le module complexe de cisaillement G*, mesuré à 10% et 60 °C sur le cycle retour, de la première couche (S) est inférieur à 2 MPa.

3. Pneumatique (1) selon l'une des revendications 1 ou 2, **caractérisé en ce que** la valeur maximale de $\tan(\delta)$, noté $\tan(\delta)_{max}$, de la première couche (S) est inférieure à 0.100.

4. Pneumatique (1) selon l'une des revendications 1 à 3, **caractérisé en ce que** ladite première couche (S) de mélange polymérique comporte une charge renforçante constituée :

   a) soit par du noir de carbone de surface spécifique BET comprise entre 30 et 160 m$^2$/g, employé à un taux égal ou supérieur à 15 pce et inférieur ou égal à 28 pce,
   b) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique comprise entre 30 et 260 m$^2$/g employée à un taux supérieur ou égal à 15 pce et inférieur ou égal à 55 pce,
   c) soit par un coupage de noir de carbone décrit en a) et une charge blanche décrite en b), dans lequel le taux global de charge est supérieur ou égal à 15 pce et inférieur ou égal à 50 pce et le taux en pce de charge blanche est supérieur ou égal au taux de noir de carbone en pce moins 5.

5. Pneumatique (1) selon l'une des revendications précédentes, **caractérisé en ce que** ladite au moins une couche de calandrage d'au moins une couche de sommet de travail (41, 43) est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :

   a) soit par du noir de carbone de surface spécifique BET inférieure à 60 m$^2$/g, quelle que soit son indice de structure, employé à un taux compris entre 40 et 100 pce, et de préférence entre 60 et 90 pce,
   b) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique BET comprise entre 30 et 260 m$^2$/g employée à un taux compris entre 40 et 100 pce, et de préférence entre 60 et 90 pce,
   c) soit par un coupage de noir de carbone décrit en (a) et d'une charge blanche décrite en (b), dans lequel le taux global de charge est compris entre 40 et 100 pce, et de préférence entre 60 et 90 pce.

**6.** Pneumatique (1) selon l'une des revendications précédentes, ledit pneumatique comportant une deuxième couche (G) de mélange polymérique axialement au contact de la première couche (S) de mélange polymérique radialement entre l'armature de carcasse (2) et la couche d'éléments de renforcement (41) radialement la plus intérieure de l'armature de sommet (4), **caractérisé en ce que** le module complexe de cisaillement dynamique G*, mesuré à 10% et 60 °C sur le cycle retour, de ladite deuxième couche (G) de mélange polymérique est supérieur à 1.35 MPa.

**7.** Pneumatique (1) selon la revendication 6, **caractérisé en ce que** le module complexe de cisaillement G*, mesuré à 10% et 60 °C sur le cycle retour, de la deuxième couche (G) est inférieur à 2 MPa.

**8.** Pneumatique (1) selon l'une des revendications 6 ou 7, **caractérisé en ce que** la valeur maximale de tan($\delta$), noté tan($\delta$)$_{max}$, de la deuxième couche (G) est inférieure à 0.100.

**9.** Pneumatique (1) selon l'une des revendications 6 à 8, **caractérisé en ce que** ladite deuxième couche (G) de mélange polymérique comporte une charge renforçante constituée :

a) soit par du noir de carbone de surface spécifique BET comprise entre 30 et 160 m2/g, employé à un taux égal ou supérieur à 15 pce et inférieur ou égal à 28 pce,
b) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique comprise entre 30 et 260 m$^2$/g employée à un taux supérieur ou égal à 15 pce et inférieur ou égal à 55 pce,
c) soit par un coupage de noir de carbone décrit en a) et une charge blanche décrite en b), dans lequel le taux global de charge est supérieur ou égal à 15 pce et inférieur ou égal à 50 pce et le taux en pce de charge blanche est supérieur ou égal au taux de noir de carbone en pce moins 5.

**10.** Pneumatique (1) selon l'une des revendications précédentes, une couche (C) de mélange caoutchouteux étant disposée entre au moins les extrémités desdites au moins deux couches de sommet de travail (41, 43) et lesdites au moins deux couches de sommet de travail (41, 43) ayant des largeurs axiales inégales, **caractérisé en ce que** la distance (d) entre l'extrémité de la couche de travail (43) axialement la plus étroite et la couche de travail (41) séparée de la couche de travail (43) axialement la plus étroite par la couche (C) de mélange caoutchouteux est telle que 1.1ø < d < 2.2ø, ø étant le diamètre des éléments de renforcement de ladite au moins une couche d'éléments de renforcement circonférentiels (42) et **en ce que**, dans un plan méridien, l'épaisseur de la couche (C) de mélange caoutchouteux est sensiblement constante sur la largeur axiale comprise entre l'extrémité axialement intérieure de la couche (C) et l'extrémité de la couche de travail (43) axialement la plus étroite.

**11.** Pneumatique (1) selon l'une des revendications précédentes, **caractérisé en ce que** lesdits éléments de renforcement d'au moins une couche de sommet de travail (41, 43) sont des câbles à couches saturées, au moins une couche interne étant gainée d'une couche constituée d'une composition polymérique telle qu'une composition de caoutchouc non réticulable, réticulable ou réticulée, de préférence à base d'au moins un élastomère diénique.

**12.** Pneumatique (1) selon l'une des revendications précédentes, **caractérisé en ce que** la couche d'éléments de renforcement circonférentiels (42) est radialement disposée entre deux couches de sommet de travail (41, 43).

**13.** Pneumatique (1) selon l'une des revendications précédentes, **caractérisé en ce que** les éléments de renforcement d'au moins une couche d'éléments de renforcement circonférentiels (42) sont des éléments de renforcement métalliques présentant un module sécant à 0,7 % d'allongement compris entre 10 et 120 GPa et un module tangent maximum inférieur à 150 GPa.

**14.** Pneumatique (1) selon l'une des revendications précédentes, **caractérisé en ce que** les éléments de renforcement des couches de sommet de travail (41, 43) sont inextensibles.

**15.** Pneumatique (1) selon l'une des revendications précédentes, **caractérisé en ce que** l'armature de sommet (4) est complétée radialement à l'extérieur par au moins une nappe supplémentaire (44), dite de protection, d'éléments de renforcement dits élastiques, orientés par rapport à la direction circonférentielle avec un angle compris entre 10° et 45° et de même sens que l'angle formé par les éléments de la nappe de travail (43) qui lui est radialement adjacente.

**16.** Pneumatique (1) selon l'une des revendications précédentes, **caractérisé en ce que** l'armature de sommet (4) comporte en outre une couche de triangulation formée d'éléments de renforcement métalliques faisant avec la direction circonférentielle des angles supérieurs à 60°.

**Patentansprüche**

1. Luftreifen (1) mit radialer Karkassenbewehrung (2), der eine Scheitelbewehrung (4) enthält, die von mindestens zwei Arbeitsscheitelschichten (41, 43) von Verstärkungselementen gebildet wird, welche Verstärkungselemente sich von einer Schicht zur anderen kreuzen, indem sie mit der Umfangsrichtung Winkel zwischen 10° und 45° bilden, wobei die mindestens zwei Arbeitsscheitelschichten (41, 43) je von Verstärkungselementen gebildet werden, die zwischen zwei Kalandrierschichten aus Kautschukmischung eingefügt werden, wobei eine erste Schicht (S) aus Polymermischung mit mindestens einer Arbeitsscheitelschicht (41) in Kontakt und mit der Karkassenbewehrung (2) in Kontakt ist, wobei die erste Schicht (S) aus Polymermischung sich axial bis mindestens zum axialen Ende des Laufstreifens (5) erstreckt, wobei der Laufstreifen (5) die Scheitelbewehrung (4) überdeckt und über zwei Flanken mit zwei Wülsten verbunden ist, wobei die Scheitelbewehrung (4) mindestens eine Schicht von Umfangsverstärkungselementen (42) aufweist, **dadurch gekennzeichnet, dass** der Elastizitätsmodul unter Spannung bei 10% Dehnung mindestens einer Kalandrierschicht mindestens einer Arbeitsscheitelschicht (41, 43) höher als 9 MPa ist, und dass der maximale Wert von $\tan(\delta)$, mit $\tan(\delta)$max bezeichnet, der mindestens einen Kalandrierschicht mindestens einer Arbeitsscheitelschicht (41, 43) niedriger als 0.100 ist, und dass der komplexe dynamische Schermodul G*, gemessen bei 10% und 60°C im Rückzyklus, der ersten Schicht (S) aus Polymermischung höher als 1.35 MPa ist.

2. Luftreifen (1) nach Anspruch 1, **dadurch gekennzeichnet, dass** der komplexe Schermodul G*, gemessen bei 10% und 60°C im Rückzyklus, der ersten Schicht (S) niedriger als 2 MPa ist.

3. Luftreifen (1) nach einem der Ansprüche 1 oder 2, **dadurch gekennzeichnet, dass** der maximale Wert von $\tan(\delta)$, mit $\tan(\delta)$max bezeichnet, der ersten Schicht (S) niedriger als 0.100 ist.

4. Luftreifen (1) nach einem der Ansprüche 1 bis 3, **dadurch gekennzeichnet, dass** die erste Schicht (S) aus Polymermischung einen verstärkenden Füllstoff aufweist, der besteht aus:

   a) entweder Ruß mit einer spezifischen Oberfläche BET zwischen 30 und 160 m$^2$/g, verwendet in einem Anteil gleich oder höher als 15 pce und niedriger als oder gleich 28 pce,
   b) oder einem hellen Füllstoff von der Art Kieselsäure und/oder Aluminiumoxid, der Oberflächenfunktionen SiOH und/oder AlOH aufweist, ausgewählt aus der Gruppe, die von den gefällten oder pyrogenen Kieselsäuren, den Aluminiumoxiden oder den Aluminosilikaten oder auch den vor oder nach der Synthese modifizierten Rußen mit einer spezifischen Oberfläche zwischen 30 und 260 m$^2$/g gebildet wird, verwendet in einem Anteil höher als oder gleich 15 pce und niedriger als oder gleich 55 pce,
   c) oder einem Verschnitt von unter a) beschriebenem Ruß und einem unter b) beschriebenen hellen Füllstoff, wobei der globale Füllstoffanteil höher als oder gleich 15 pce und niedriger als oder gleich 50 pce und der Anteil in pce von hellem Füllstoff höher als der oder gleich dem Anteil von Ruß in pce minus 5 ist.

5. Luftreifen (1) nach einem der vorhergehenden Ansprüche, **dadurch gekennzeichnet, dass** die mindestens eine Kalandrierschicht mindestens einer Arbeitsscheitelschicht (41, 43) eine Elastomermischung auf der Basis von natürlichem Kautschuk oder synthetischem Polyisopren mit einer Mehrheit von cis-1,4-Verkettungen und ggf. von mindestens einem weiteren Dienelastomer ist, wobei der natürliche Kautschuk oder das synthetische Polyisopren im Fall eines Verschnitts in einem Mehrheitsanteil bezüglich des Anteils des anderen oder der anderen verwendeten Dienelastomere vorliegt, und einem verstärkenden Füllstoff ist, der besteht:

   a) entweder Ruß mit einer spezifischen Oberfläche BET geringer als 60 m$^2$/g, unabhängig von seinem Strukturindex, verwendet in einem Anteil zwischen 40 und 100 pce, und vorzugsweise zwischen 60 und 90 pce,
   b) oder aus einem hellen Füllstoff der Art Kieselsäure und/oder Aluminiumoxid, der Oberflächenfunktionen SiOH und/oder AlOH aufweist, ausgewählt aus der Gruppe, die von den gefällten oder pyrogenen Kieselsäuren, den Aluminiumoxiden oder den Aluminosilikaten oder auch den während oder nach der Synthese modifizierten Rußen mit einer spezifischen Oberfläche BET zwischen 30 und 260 m$^2$/g gebildet wird, verwendet in einem Anteil zwischen 40 und 100 pce, und vorzugsweise zwischen 60 und 90 pce,
   c) oder aus einem Verschnitt von in (a) beschriebenem Ruß und von einem in (b) beschriebenen hellen Füllstoff, wobei der globale Füllstoffanteil zwischen 40 und 100 pce, und vorzugsweise zwischen 60 und 90 pce liegt.

6. Luftreifen (1) nach einem der vorhergehenden Ansprüche, wobei der Luftreifen eine zweite Schicht (G) aus Polymermischung aufweist, die mit der ersten Schicht (S) aus Polymermischung radial zwischen der Karkassenbewehrung (2) und der radial am weitesten innen liegenden Schicht von Verstärkungselementen (41) der Scheitelbewehrung (4) axial in Kontakt ist, **dadurch gekennzeichnet, dass** der dynamische komplexe Schermodul G*, gemessen bei 10% und 60°C im Rückzyklus, der zweiten Schicht (G) aus Polymermischung höher als 1.35 MPa ist.

7.  Luftreifen (1) nach Anspruch 6, **dadurch gekennzeichnet, dass** der komplexe Schermodul G*, gemessen bei 10% und 60°C im Rückzyklus, der zweiten Schicht (G) niedriger als 2 MPa ist.

8.  Luftreifen (1) nach einem der Ansprüche 6 oder 7, **dadurch gekennzeichnet, dass** der maximale Wert von $\tan(\delta)$, mit $\tan(\delta)$max bezeichnet, der zweiten Schicht (G) niedriger als 0.100 ist.

9.  Luftreifen (1) nach einem der Ansprüche 6 bis 8, **dadurch gekennzeichnet, dass** die zweite Schicht (G) aus Polymermischung einen verstärkenden Füllstoff aufweist, der besteht aus:

    a) entweder Ruß mit einer spezifischen Oberfläche BET zwischen 30 und 160 $m^2$/g, verwendet in einem Anteil gleich oder höher als 15 pce und niedriger als oder gleich 28 pce,
    b) oder einem hellen Füllstoff der Art Kieselsäure und/oder Aluminiumoxid, der Oberflächenfunktionen SiOH und/oder AlOH aufweist, ausgewählt aus der Gruppe, die von den gefällten oder pyrogenen Kieselsäuren, den Aluminiumoxiden oder den Aluminosilikaten oder auch den vor oder nach der Synthese modifizierten Rußen mit einer spezifischen Oberfläche zwischen 30 und 260 $m^2$/g gebildet wird, verwendet in einem Anteil höher als oder gleich 15 pce und niedriger als oder gleich 55 pce,
    c) oder aus einem Verschnitt von unter a) beschriebenem Ruß und einem unter b) beschriebenen hellen Füllstoff, wobei der globale Füllstoffanteil höher als oder gleich 15 pce und niedriger als oder gleich 50 pce und der Anteil in pce von hellem Füllstoff höher als der oder gleich dem Anteil von Ruß in pce minus 5 ist.

10. Luftreifen (1) nach einem der vorhergehenden Ansprüche, wobei eine Schicht (C) aus Kautschukmischung zwischen mindestens den Enden der mindestens zwei Arbeitsscheitelschichten (41, 43) angeordnet ist und die mindestens zwei Arbeitsscheitelschichten (41, 43) ungleichmäßige axiale Breiten aufweisen, **dadurch gekennzeichnet, dass** der Abstand (d) zwischen dem Ende der axial am schmalsten Arbeitsschicht (43) und der Arbeitsschicht (41), die von der axial am schmalsten Arbeitsschicht (43) durch die Schicht (C) aus Kautschukmischung abgetrennt ist, derart ist, dass 1,1ø < d < 2,2ø, wobei ø der Durchmesser der Verstärkungselemente der mindestens einen Schicht von Umfangsverstärkungselementen (42) ist, und dass die Dicke der Schicht (C) aus Kautschukmischung in einer Meridianebene auf der axialen Breite zwischen dem axial inneren Ende der Schicht (C) und dem Ende der axial am schmalsten Arbeitsschicht (43) im Wesentlichen konstant ist.

11. Luftreifen (1) nach einem der vorhergehenden Ansprüche, **dadurch gekennzeichnet, dass** die Verstärkungselemente mindestens einer Arbeitsscheitelschicht (41, 43) Kabel mit gesättigten Schichten sind, wobei mindestens eine innere Schicht von einer Schicht umhüllt wird, die aus einer Polymerzusammensetzung besteht, wie eine nicht vernetzbare, vernetzbare oder vernetzte Kautschukzusammensetzung, vorzugsweise auf der Basis von mindestens einem Dienelastomer.

12. Luftreifen (1) nach einem der vorhergehenden Ansprüche, **dadurch gekennzeichnet, dass** die Schicht von Umfangsverstärkungselementen (42) radial zwischen zwei Arbeitsscheitelschichten (41, 43) angeordnet ist.

13. Luftreifen (1) nach einem der vorhergehenden Ansprüche, **dadurch gekennzeichnet, dass** die Verstärkungselemente mindestens einer Schicht von Umfangsverstärkungselementen (42) metallische Verstärkungselemente sind, die einen Sekantenmodul bei 0,7% Dehnung zwischen 10 und 120 GPa und einen maximalen Tangentenmodul niedriger als 150 GPa aufweisen.

14. Luftreifen (1) nach einem der vorhergehenden Ansprüche, **dadurch gekennzeichnet, dass** die Verstärkungselemente der Arbeitsscheitelschichten (41, 43) nicht dehnbar sind.

15. Luftreifen (1) nach einem der vorhergehenden Ansprüche, **dadurch gekennzeichnet, dass** die Scheitelbewehrung (4) radial außen durch mindestens eine zusätzliche Lage (44), Schutzlage genannt, von so genannten elastischen Verstärkungselementen ergänzt ist, die in Bezug zur Umfangsrichtung mit einem Winkel zwischen 10° und 45° und in dieselbe Richtung ausgerichtet sind, wie der Winkel, der von den Elementen der an sie radial angrenzenden Arbeitslage (43) gebildet wird.

**16.** Luftreifen (1) nach einem der vorhergehenden Ansprüche, **dadurch gekennzeichnet, dass** die Scheitelbewehrung (4) ferner eine Triangulationsschicht umfasst, die von metallischen Verstärkungselementen gebildet wird, die mit der Umfangsrichtung Winkel von mehr als 60° bilden.

## Claims

**1.** Tyre (1) with a radial carcass reinforcement (2) comprising a crown reinforcement formed of at least two working crown layers of reinforcing elements (41, 43), crossed from one layer to the other making with the circumferential direction angles comprised between 10° and 45°, the said at least two working crown layers each being formed of reinforcing elements inserted between two skim layers of rubber compound, a first layer (S) of polymer compound being in contact with at least one working crown layer (41) and in contact with the carcass reinforcement (2), the said first layer (S) of polymer compound extending axially as far as at least the axial end of the tread (5), the said tread (5) radially capping the crown reinforcement (4) and being connected to two beads by two sidewalls, the crown reinforcement (4) comprising at least one layer of circumferential reinforcing elements (42), **characterized in that** the elastic modulus under tension at 10% elongation of at least one skim layer of at least one working crown layer (41, 43) is greater than 9 MPa, **in that** the maximum value of tan($\delta$), denoted tan($\delta$)$_{max}$, of the said at least one skim layer of at least one working crown layer (41, 43) is less than 0.100 and **in that** the complex dynamic shear modulus G*, measured at 10% and 60°C on the return cycle, of the said first layer (S) of polymer compound is greater than 1.35 MPa.

**2.** Tyre (1) according to Claim 1, **characterized in that** the complex shear modulus G*, measured at 10% and 60°C on the return cycle, of the first layer (S) is less than 2 MPa.

**3.** Tyre (1) according to one of Claims 1 or 2, **characterized in that** the maximum value of tan($\delta$), denoted tan($\delta$)$_{max}$, of the first layer (S) is less than 0.100.

**4.** Tyre (1) according to one of Claims 1 to 3, **characterized in that** the said first layer (S) of polymer compound comprises a reinforcing filler composed of:

a) either carbon black with a BET specific surface area of between 30 and 160 m$^2$/g, used in a content equal to or greater than 15 phr and less than or equal to 28 phr,
b) or a white filler of the silica and/or alumina type comprising SiOH and/or AlOH surface functional groups selected from the group formed of precipitated or pyrogenated silicas, aluminas or aluminosilicates or alternatively carbon blacks modified during or after synthesis with a specific surface area of between 30 and 260 m$^2$/g used at a content greater than or equal to 15 phr and less than or equal to 55 phr,
c) or a blend of carbon black described at a) and a white filler described at b), in which the overall filler content is greater than or equal to 15 phr and less than or equal to 50 phr and the white filler phr content is greater than or equal to the phr content of carbon black minus 5.

**5.** Tyre (1) according to one of the preceding claims, **characterized in that** the said at least one skim layer of at least one working crown layer (41, 43) is an elastomer compound based on natural rubber or based on synthetic polyisoprene with a predominance of cis-1,4 chains and possibly at least one other diene elastomer, natural rubber or synthetic polyisoprene in the case of a blend being present at a content that predominates over the content of the other diene elastomer or elastomers used and of a reinforcing filler made up of:

a) either carbon black of BET specific surface area less than 60 m$^2$/g whatever its oil absorption number, used at a content of between 40 and 100 phr and preferably of between 60 and 90 phr,
b) or a white filler of the silica and/or alumina type comprising SiOH and/or AlOH functional groups at the surface, selected from the group formed of precipitated or pyrogenated silicas, aluminas or aluminosilicates or alternatively still carbon blacks modified during or after the synthesis with BET specific surface area of between 30 and 260 m$^2$/g used at a content of between 40 and 100 phr and preferably of between 60 and 90 phr,
c) or a blend of carbon black described at (a) and of a white filler described at (b), in which blend the overall filler content is between 40 and 100 phr and preferably between 60 and 90 phr.

**6.** Tyre (1) according to one of the preceding claims, the said tyre comprising a second layer (G) of polymer compound axially in contact with the first layer (S) of polymer compound radially between the carcass reinforcement (2) and the radially innermost layer of reinforcing elements (41) of the crown reinforcement (4), **characterized in that** the complex dynamic shear modulus G*, measured at 10% and 60°C on the return cycle, of the said second layer (G) of polymer compound is greater than 1.35 MPa.

7. Tyre (1) according to Claim 6, **characterized in that** the complex shear modulus G*, measured at 10% and 60°C on the return cycle, of the second layer (G) is less than 2 MPa.

8. Tyre (1) according to one of Claims 6 or 7, **characterized in that** the maximum tan ($\delta$) value, denoted $\tan(\delta)_{max}$, of the second layer (G) is less than 0.100.

9. Tyre (1) according to one of Claims 6 to 8, **characterized in that** the said second layer (G) of polymer compound comprises a reinforcing filler made up of:

   a) either carbon black with a BET specific surface area of between 30 and 160 $m^2$/g, used in a content equal to or greater than 15 phr and less than or equal to 28 phr,
   b) or a white filler of the silica and/or alumina type comprising SiOH and/or AlOH surface functional groups selected from the group formed of precipitated or pyrogenated silicas, aluminas or aluminosilicates or alternatively carbon blacks modified during or after synthesis with a specific surface area of between 30 and 260 $m^2$/g used at a content greater than or equal to 15 phr and less than or equal to 55 phr,
   c) or a blend of carbon black described at a) and a white filler described at b), in which the overall filler content is greater than or equal to 15 phr and less than or equal to 50 phr and the white filler phr content is greater than or equal to the phr content of carbon black minus 5.

10. Tyre (1) according to one of the preceding claims, a layer (C) of rubber compound being placed between at least the ends of the said at least two working crown layers (41, 43) and the said at least two working crown layers (41, 43) having unequal axial widths, **characterized in that** the distance (d) between the end of the axially narrowest working layer (43) and the working layer (41) separated from the axially narrowest working layer (43) by the layer (C) of rubber compound is such that 1.1ø < d < 2.2ø, ø being the diameter of the reinforcing elements of the said at least one layer of circumferential reinforcing elements (42) and **in that,** in a meridian plane, the thickness of the layer (C) of rubber compound is substantially constant over the axial width comprised between the axially interior end of the layer (C) and the end of the axially narrowest working layer (43).

11. Tyre (1) according to one of the preceding claims, **characterized in that** the said reinforcing elements of at least one working crown layer (41, 43) are cords with saturated layers, at least one internal layer being sheathed by a layer made of a polymer composition such as a non-crosslinkable, crosslinkable or crosslinked rubber composition preferably based on at least one diene elastomer.

12. Tyre (1) according to one of the preceding claims, **characterized in that** the layer of circumferential reinforcing elements (42) is positioned radially between two working crown layers (41, 43).

13. Tyre (1) according to one of the preceding claims, **characterized in that** the reinforcing elements of at least one layer of circumferential reinforcing elements (42) are metallic reinforcing elements having a secant modulus at 0.7% elongation comprised between 10 and 120 GPa and a maximum tangent modulus less than 150 GPa.

14. Tyre (1) according to one of the preceding claims, **characterized in that** the reinforcing elements of the working crown layers (41, 43) are inextensible.

15. Tyre (1) according to one of the preceding claims, **characterized in that** the crown reinforcement (4) is supplemented radially on the outside by at least one additional ply (44), referred to as a protective ply, of reinforcing elements referred to as elastic elements, which are oriented with respect to the circumferential direction at an angle of between 10° and 45° in the same direction as the angle formed by the elements of the working ply radially adjacent to it.

16. Tyre (1) according to one of the preceding claims, **characterized in that** the crown reinforcement (4) further comprises a triangulation layer formed of metallic reinforcing elements making angles greater than 60 ° with the circumferential direction.

**FIG.1**

**FIG.2**

**FIG.3**

## RÉFÉRENCES CITÉES DANS LA DESCRIPTION

**Documents brevets cités dans la description**

- WO 2004076204 A
- FR 1389428
- FR 2222232
- WO 9924269 A
- FR 2887807
- EP 0799854 A
- WO 2006013077 A
- WO 2009083212 A

**Littérature non-brevet citée dans la description**

- **BRUNAUER, EMMET.** *The Journal of the American Chemical Society,* Février 1938, vol. 60, 309